Europäisches Patentamt

European Patent Office

Office européen des brevets

(11) Veröffentlichungsnummer: **0 508 339 B1**

(12) **EUROPÄISCHE PATENTSCHRIFT**

(45) Veröffentlichungstag der Patentschrift: **05.07.95**

(51) Int. Cl.⁶: **G01B 11/24**, G01B 11/02

(21) Anmeldenummer: **92105868.1**

(22) Anmeldetag: **04.04.92**

(54) **Messsystem zur berührungslosen Erfassung der Kontur von Langgegenständen mit diffus reflektierender Oberfläche.**

(30) Priorität: **12.04.91 DE 4112009**

(43) Veröffentlichungstag der Anmeldung:
**14.10.92 Patentblatt 92/42**

(45) Bekanntmachung des Hinweises auf die
Patenterteilung:
**05.07.95 Patentblatt 95/27**

(84) Benannte Vertragsstaaten:
**DE ES FR IT SE**

(56) Entgegenhaltungen:
**EP-A- 0 007 079**
**EP-A- 0 145 957**

(73) Patentinhaber: **AUTRONIC Gesellschaft für Bildverarbeitung und Systeme mbH**
**Greschbachstrasse 29**
**D-76229 Karlsruhe (DE)**

(72) Erfinder: **Tengler, Jürgen, Dipl.-Ing.**
**Am Schlüpfelberg 2a**
**W-8431 Mühlhausen (DE)**

(74) Vertreter: **Hofmann, Gerhard, Dipl.-Ing. Patentassessor**
**Stephanstrasse 49**
**D-90478 Nürnberg (DE)**

Rank Xerox (UK) Business Services
(3.10/3.09/3.3.3)

**Beschreibung**

Die Erfindung betrifft ein Meßsystem zur berührungslosen Erfassung von Langgegenständen mit diffus reflektierender Oberfläche, insbesondere zum Einsatz in Sägewerken, um aus Seitenware scharfkantige Bretter zu schneiden.

Zur berührungslosen Vermessung sind unter anderem eine Reihe von optischen Koordinatenmeßgeräten bekannt. Das Grundprinzip ist hierbei darin zu sehen, daß wie bei bekannten elektro-mechanischen Tastsystemen vorgegangen wird, indem die Werkstücksgeometrie durch koordinatenmäßige Erfassung von einzelnen Punkten auf der Oberfläche des Werkstückes vorgenommen wird. Die Oberfläche wird jedoch optisch, d. h. berührungslos angetastet. Hierbei gibt es wiederum verschiedene Verfahren, z. B. das der Interferenz, der Beugung, der Triangulation, der Bildanalyse und anderes. Hierzu wird unter anderem in der DE-OS 29 03 529 und in der DE-OS 21 13 522 ein Verfahren zur berührungslosen Vermessung von Objekten beschrieben, in welchen die optische Abtastung von Werkstücken nach dem Triangulations-Prinzip vorgenommen wird.

Dazu wird ein Lichtfleck unter einem Winkel auf das Meßobjekt projiziert und aus der mit einem positionsempfindlichen Detektor gemessenen Verschiebung des Bildes des Lichtfleckes der Abstand der Strahlenquelle zum Meßobjekt bestimmt. Mit Hilfe eines dem Detektor zugeordneten Bildanalysegerätes erfolgt dann eine gewünschte weitere Auswertung und Bearbeitung des ermittelten Wertes. Der Projektor und das Abbildungssystem sind dabei als sogenannter optischer Tastkopf zu einer Baugruppe vereinigt.

Zur Vermessung längerer Gegenstände wird dieser dann durch geeignete Führungssysteme über das Objekt bewegt. Mit diesem Verfahren läßt sich jedoch die Objektentfernung nur dann fehlerfrei ermitteln, wenn sich der Winkel, den die Objektfläche mit den Achsen des Tastkopfes bildet, nicht ändert, oder wenn der Tastkopf dem Werkstück so nachgeführt wird, daß das Bild des projizierten Lichtfleckes stets im Zentrum des Detektors erscheint.

Eine Nachführung des Tastkopfes entlang der Objektkontur bedingt jedoch einen hohen mechanischen und regeltechnischen Aufwand. Außerdem ist die Meßgeschwindigkeit nicht nur von dem elektronischen sondern auch von dem mechanischen Aufbau abhängig, d. h. sie wird durch letzteres beeinträchtigt.

Um die Nachführung des Tastkopfes zu vermeiden, wird in der DE-OS 33 42 675 (= EP-A-0 145 957) gezeigt, daß der Tastkopf über eine Rasteinrichtung für verschiedene Winkellagen einstellbar ist. Bei der Vermessung langer Gegenstände wäre eine ständige neue Winkeleinstellung gefordert, was wiederum einen hohen mechanischen Aufwand erfordert.

Um die Konturen langer Werkstücke zu erfassen, werden in der Praxis deshalb mehrere Tastköpfe eingesetzt, wodurch die Messung dann sehr schnell durchgeführt werden kann. Bei einer Vielzahl von benötigten Tastköpfen wird das dann zu einer ökonomischen Frage. Zur Vermessung von langen Gegenständen, wie beispielsweise Brettware und Baumstämmen, wird beispielsweise in Sägewerken mit einem Parabol-Laser-Scanner gearbeitet (Ed M. Williston: Computer Control System for log processing and lumber manufacturing, 1985, Seite 127).

Hier muß über die gesamte Breite des zu bearbeitenden Brettes ein Parabol-Spiegel liegen, der über einen rotierenden Spiegel mit einem Laser beaufschlagt wird. Die Laserstrahlen werden dann vom Parabol-Spiegel senkrecht auf eine Bezugsebene geführt, in welcher das Meßobjekt quer zu der Scanrichtung durchgeführt wird. Auf beiden Seiten befinden sich über dieser Bezugsebene Detektoren, die die vom Meßobjekt reflektierten Strahlen aufnehmen. Diese Meßmöglichkeit eignet sich, da es einen hohen Aufwand erfordert, nur für große Betriebe mit einem hohen Durchsatz.

Für die Vermessung von zu besäumender Brettware während der Längsförderung gibt es natürlich in Sägewerken schon ein kostengünstiges Verfahren mit Laser-Scanning-Systemen. Dort wird hinter einem Einzugstisch das Vermessen der Brettware über eine Sensorreihe vorgenommen. Da aber Vermessen und Sägen serielle Vorgänge sind, wird hier zusätzlicher Platz entsprechend der Länge des zu bearbeitenden Brettes benötigt. Diesen Platzbedarf haben aber kleine Sägewerke oft nicht. Weiterhin gibt es Probleme beim Übergang vom Querförderer zum Einzugstisch. Da das Vermessen in diesem Fall erst abgeschlossen ist, wenn das Brett in seiner gesamten Länge durchgelaufen ist, ist kein genaues Ausrichten des Brettes möglich. Bedingt durch diesen Umstand kann die Brettware nicht in jedem Fall optimal genutzt werden, d. h. es entstehen ökonomische Einbußen für den Betreiber.

Wenn jetzt das Vermessen und Sägen derart ausgerichtet werden soll, daß der zusätzliche Platzbedarf entfällt, muß man, wie bereits weiter oben geschildert, einen hohen Aufwand an Sensoren und Auswerteeinrichtungen betreiben. Dieser erhöhte elektromechanische Aufwand läßt dann die gesamte Anlage beispielsweise für ein kleines Sägewerk nicht mehr ökonomisch erscheinen, da zusätzlich auch die Ausfallrate der Komponenten steigt.

Es ist somit Aufgabe der Erfindung ein ökonomisches und nur von opto-elektronischen Bauelementen bestimmtes Meßsystem für lange Gegenstände mit diffus reflektierender Oberfläche zu finden, wobei das Meßsystem zum Vermessen keinen zusätzlichen Platz beanspruchen darf.

Diese Aufgabe wird mit den Merkmalen im Kennzeichen des Hauptanspruches gelöst. Dabei werden zur Erfassung der Meßobjektkonturen mehrere Strahlenquellen in einem bestimmten, vom Bezugspunkt der Detektorzeile aus größer werdenden, Meßabstand zueinander und parallel zur Längsachse des Meßobjektes, aber außerhalb der Beobachtungsebene der auswertenden Detektorzeile angebracht, wobei die Strahlen jeder Quelle aus der Sicht der Detektorzeile ein Dreieck formen, und der Meßgegenstand wird quer zur Beobachtungsebene geführt, wobei dann pro Strahlenquelle Meßpunkte der jeweiligen Kontur an dieser Stelle aufgenommen werden.

Der Vorteil dieser Lösung, gemessen am Stand der Technik, ist darin zu sehen, daß das Meßsystem keine beweglichen Teile aufweist und nur ein Detektor notwendig ist.

Weiterführende Ausbildungen der Erfindung sind in den Unteransprüchen enthalten.

Die Erfindung wird nachstehend anhand eines Ausführungsbeispiels näher erläutert. In der zugehörigen Zeichnung zeigt:

Figur 1     eine Darstellung der Strahlengänge bzw. Lichtschnitte der einzelnen Meßstellen,
Figur 2     eine detailierte Darstellung der CCD-Zeile nach Figur 1,
Figur 3     einen Ausschnitt zweier Meßstellen nach Figur 1,
Figur 4     eine Darstellung des Objektfeldes der CCD-Zeilenkamera auf der Brettoberfläche,
Figur 5     einen Lichtschnitt mit der Objektfläche eines Pixels,
Figur 6     eine Darstellung der einzelnen Ebenen,
Figur 7     ein mögliches Meßobjekt,
Figur 8     den Schnitt einer Messung,
Figur 9     eine Darstellung der Kurven der Pixel je Meßstelle in Verbindung mit dem CCD-Zeilensignal,
Figur 10    ein möglicher Einsatz der Meßanordnung in einem Sägewerk.

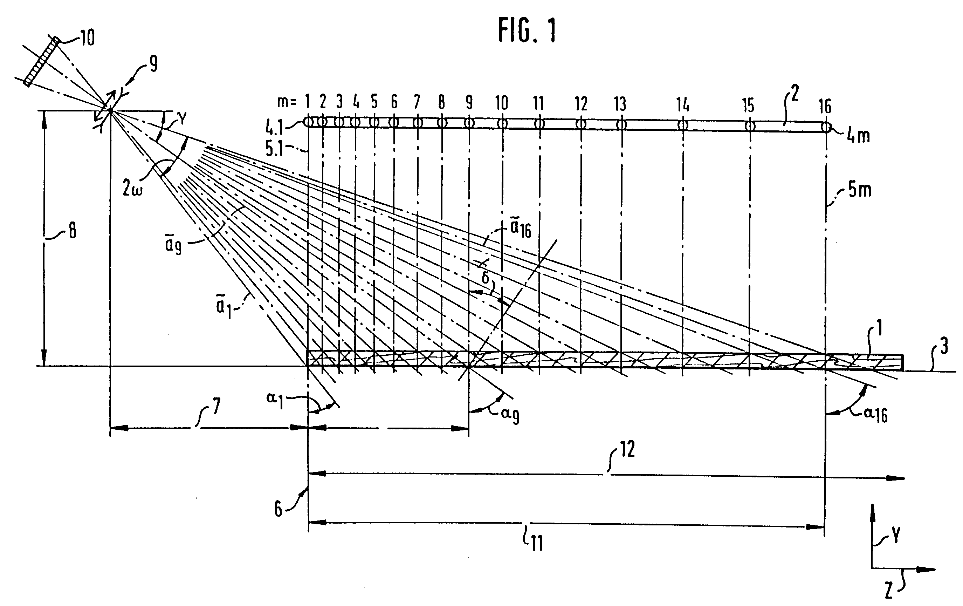

In Figur 1 wird das Konzept des Meßsystems mit seinen Lichtschnitten und Strahlengängen dargestellt. Ausgegangen wird in der gesamten weiteren Beschreibung von der Darstellung zum Ausmessen von Brettware 1, damit eine maximale Nutzung bei der Besäumung erfolgen kann. Natürlich eignet sich das System ebenfalls zur Bestimmung der Konturen anderer langer und flacher Gegenstände.

Oberhalb der Brettware 1 sind eine Anzahl von Strahlenquellen 4.m (m = 1, 2, 3...) zum Beispiel auf einer Schiene 2 oberhalb der Bezugsebene 3 und außerhalb der Detektor-Beobachtungsebene 30 angebracht, deren Lichtstrahlen senkrecht auf die Z-Achse in der Bezugsebene 3 fallen und als Lichtschnitte 5.m dargestellt sind. Der Lichtschnitt 5.1 der ersten Strahlenquelle 4.1 stellt dabei den Bezugspunkt 6 für den Nullschnitt dar. Über der Bezugsebene 3 in einer Entfernung (l) 7 und in einer Höhe (h) 8 ist ein Objektiv 9 einer CCD-Zeilenkamera 10 angeordnet. Die Meßstrecke 11 ist durch die Zahl der Lichtschnitte 5.m begrenzt. Die gesamte Meßlänge 12 kann jedoch über diese Meßstrecke 11 hinausgehen, wenn gesichert wird, daß am Nullschnitt 6 der Anfang der Brettware 1 liegt.

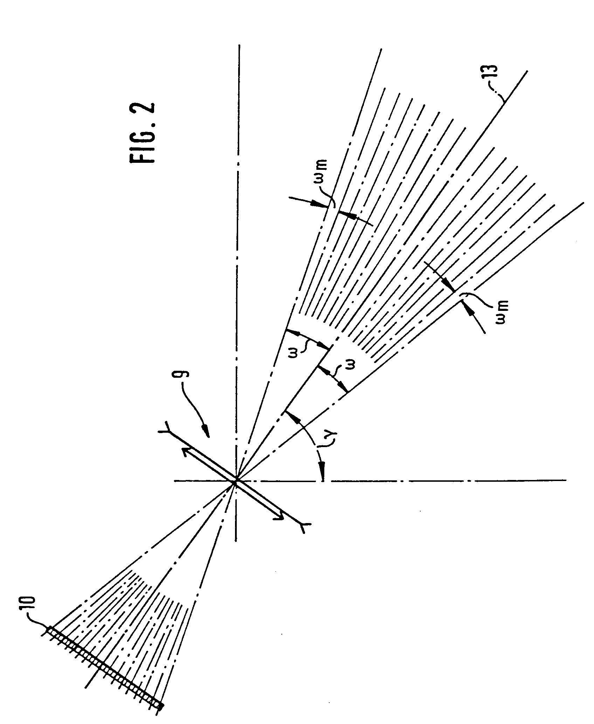

In Figur 2 ist eine detaillierte Darstellung der CCD-Zeile 10 nach Figur 1 und deren Strahlengänge durch das Objektiv 9 gezeigt. In der CCD-Zeile werden die Pixel von 0 bis 2048 aufgenommen, es ist natürlich auch eine andere Anzahl von Pixeln möglich. Ein mittlerer Strahlengang dient als optische Achse 13. Der gesamte Strahlenbereich wird durch den Objektfeldwinkel $2\omega$ erfaßt.

Der Winkel zwischen zwei Strahlengängen wird als Feldwinkel $\omega m$ für die Meßstellen bezeichnet. Von der optischen Achse 13 zur Senkrechten wird ein weiterer Winkel $\gamma$ gebildet.

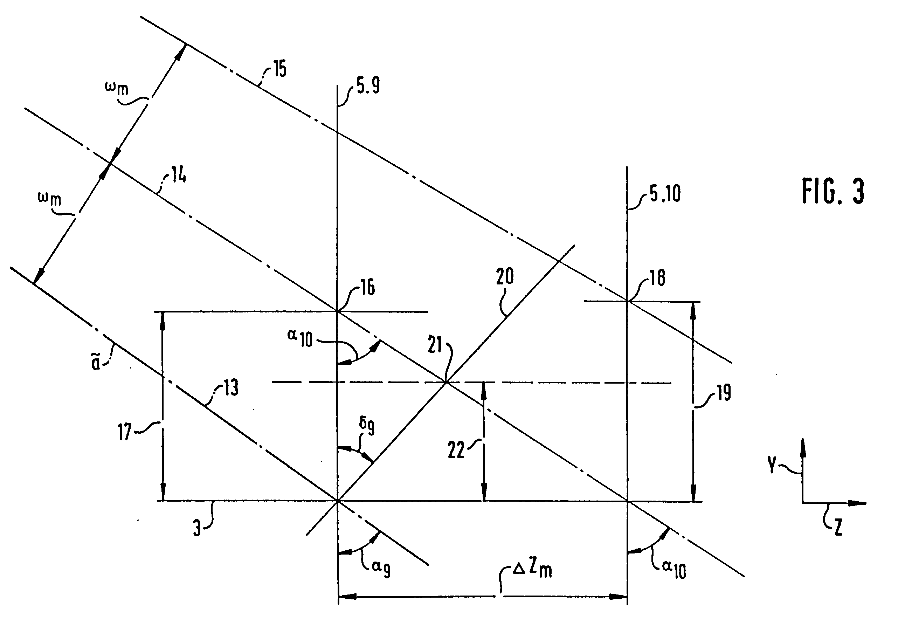

In Figur 3 ist ein Ausschnitt zweier Meßstellen nach Figur 1 gezeigt. Dargestellt wird die Bezugsebene 3 und die Ausschnitte für die zwei Lichtschnitte 5.9 und 5.10, d. h. für die 9. und 10. Strahlenquelle 4.9, 4.10. In diesem Beispiel trifft der Lichtschnitt der 9. Strahlenquelle 4.9 zusammen mit der optischen Achse 13 auf der Bezugsebene 3 zusammen. Der Winkel, den die optische Achse 13 mit dem Lichtschnitt bildet, wird mit $\delta 9$ bezeichnet. Damit ergibt sich, daß die optische Achse 13, der vom Detektor erfaßte, reflektierte Strahl des Lichtschnittes 5.9 ist. Der reflektierte Strahl des Lichtschnittes 5.10 schneidet den Lichtschnitt 5.9 im Punkt 16. Die Entfernung des Punktes 16 zur Bezugsebene 3 stellt die mögliche Meßbereichshöhe 17 an diesem Punkt dar. Der reflektierte Strahl 15 des nicht dargestellten Lichtschnittes 5.11 schneidet den Lichtschnitt 5.10 im Punkt 18. Die Entfernung des Punktes 18 von der Bezugsebene 3 stellt die Meßbereichshöhe 19, die an dieser Stelle möglich ist, dar. An dem Schnittpunkt der optischen Achse 13 mit der Bezugsebene 3 und dem Lichtschnitt 5.9 wird über einen Winkel $\delta 9$ ein weiterer Lichtschnitt 20 gezeigt. Dieser Lichtschnitt 20 weist, durch den Winkel $\delta 9$ ausgedrückt, eine Neigung aus, die für die Lichtschnitte 5.m möglich ist, um eine genauere Messung zu ermöglichen. Der Schnittpunkt 21 dieses Lichtschnittes 20 mit dem reflektierten Strahl 14 des Lichtschnittes 5.10 stellt die maximale Meßbereichshöhe 22 dar. Die Entfernung der beiden Lichtschnitte 5.9, 5.10 wird in diesem Fall mit $\Delta zm$ bezeichnet.

3

Um die einzelnen Beziehungen klar herauszustellen, wird auf folgende Formeln zurückgegriffen:

(1) $\alpha_m = \arctan \dfrac{1 + Z_m}{h}$

$Z_m$ – Meßstellen-Abstand vom Nullschnitt

$M$ – Anzahl der Meßstellen

$m$ – m. Meßstellen

$\tilde{\alpha}_m$ – Winkel Objektweite $\tilde{a}_m$ – Lot

$1, h$ – s. Zeichnung

$Np$ – Pixelzahl der CCD-Zeile

$L_{CCD}$ – Länge der CCD-Zeile

$q$ – Seitenverhältnis $\dfrac{\text{Pixel-Breite}}{\text{Pixel-Länge}}$

(2) $\omega_m = \dfrac{\alpha_M - \alpha_1}{m - 1}$

$\omega_m$ – Feldwinkel für Meßstellen m

(3) $2\omega \approx 16 \cdot \omega_m$

$2\omega$ – Objektfeldwinkel

(4) $f' \leq \dfrac{L_{CCD}}{2 \; \tan \omega}$

$f'$ – Bildbrennweite

(5) $\omega_{pm} = \dfrac{\omega_m \; M}{Np}$

$\omega_{pm}$ – Pixelfeldwinkel bei Meßstelle m

(6) $\alpha_m = \alpha_1 + (m - 1)\omega_m$

für $2 \leq m < M$

(7) $\gamma = 90° - \alpha_1 - \omega$

$\gamma$ – s. Zeichnung

(8) $Z_m = h \cdot \tan \alpha_m - 1$

(9) $\Delta Z_m = Z_{m+1} - Z_m$

$\Delta Z_m$ – Meßstellenabstand Längen-Meßbereich u. Bezugsebene

(10) $\tilde{a}_m = \dfrac{1 + Z_m}{\sin \alpha_m}$

$\tilde{a}_m$ – Objektweite außerhalb der opt. Achse

(11) $\quad dm \quad = \dfrac{\Delta Z_m}{\tan \alpha_{(m+1)}}$

$dm$ — maximal erfaßbare Brettdicke bei Meßstelle m

(12) $\quad \Delta d_{pm} \approx \dfrac{dm \cdot M}{Np}$

$\Delta d_{pm}$ — mittlere Dickenauflösung je Pixel bei Meßstelle m

$\dfrac{N_p}{M}$ — Anzahl der Pixel je Meßstelle

(13) $\quad \Delta X_{pm} = \dfrac{(am - \overline{f}) \quad \text{Zeilenbreite}}{-\overline{f}}$

$Z_{pm}$ — mittlere Brett(=Objekt)-länge je Pixel bei Meß-stelle m

$am$ — Objektweite

$\overline{f}$ — Objektbrennweite

(14) $\quad \Delta Z_{pm} = \dfrac{\Delta X_{pm}}{\cos \alpha_m \cdot q}$

$X_{pm}$ — mittlere Brett(=Objekt)-breite je Pixel bei Meß-stelle m

(15) $\quad \tilde{\alpha}_m = \text{arc } \tan \dfrac{\Delta Z_m \, (d_g - d_{max})}{d_g \cdot d_{max}}$

$\tilde{\alpha}_m$ — maximal mögliche Neigung des Lichtschnittes zur Brett-Flächennormalen für Meßstelle m

$d_{max}$ — Soll-Meßbereich für die Brettdicke + Sicherheit (Wölbung)

(16) $\quad q = \dfrac{\text{Breite der CCD-Zeile}}{\text{Pixel-Abstand (Pitch)}}$

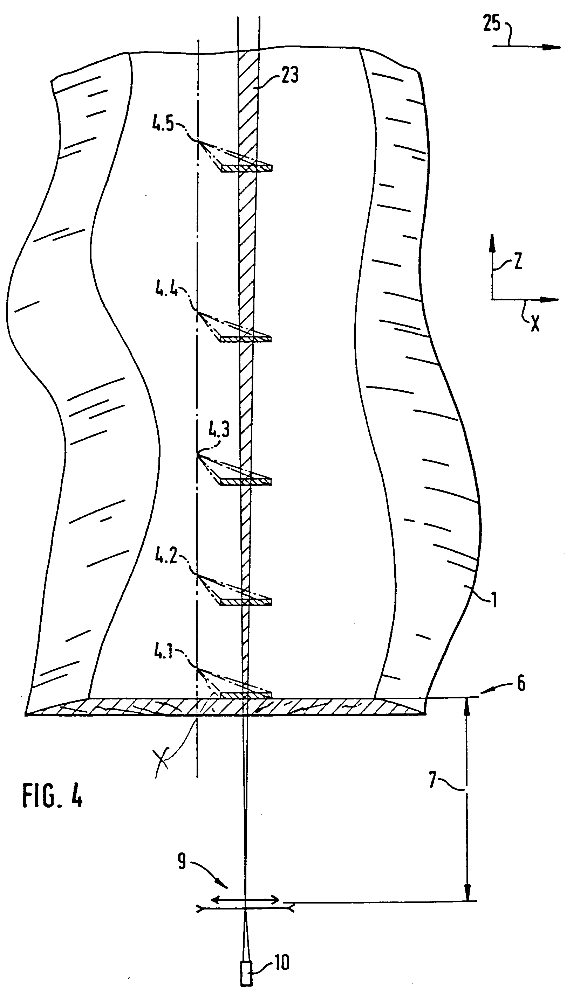

In Figur 4 wird eine Darstellung des Objektfeldes der CCD-Zeilenkamera auf der Brettoberfläche dargestellt.

In der Draufsicht der Brettware 1 erkennt man das Objektfeld 23 der CCD-Zeilenkamera 10. Das Objektiv 9 der CCD-Zeilenkamera 10 ist in der Entfernung 7 von dem Nullschnitt 6 der Brettware 1 entfernt angeordnet.

Außermittig des Objektfeldes 23 liegen die Strahlenquellen 4.m in geringer Entfernung über der Brettware 1. Die Brettvorschubsrichtung 25 läuft von der Bezugsebene 3 aus gesehen in X-Richtung.

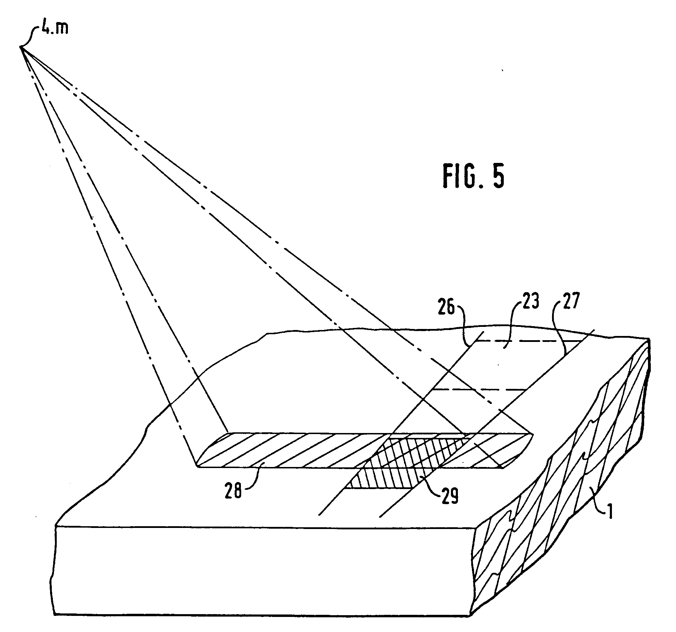

In Figur 5 wird jetzt ein Lichtschnitt mit der Oberfläche eines Pixels gezeigt. Die außermittig des Objektfeldes 23 liegende Strahlenquelle 4.m wirft ihre Strahlen in einer bestimmten Breite 28 auf die Oberfläche der Brettware 1. Das Objektfeld 23 ist durch seine Objektfeldgrenzen 26, 27 begrenzt. Der Schnitt 28 des Strahlenganges der Strahlenquelle 4.m mit dem Objektfeld 23 ergibt den Teil der zu der Oberfläche 29 eines Pixels konjungierten Fläche, der bestrahlt wird.

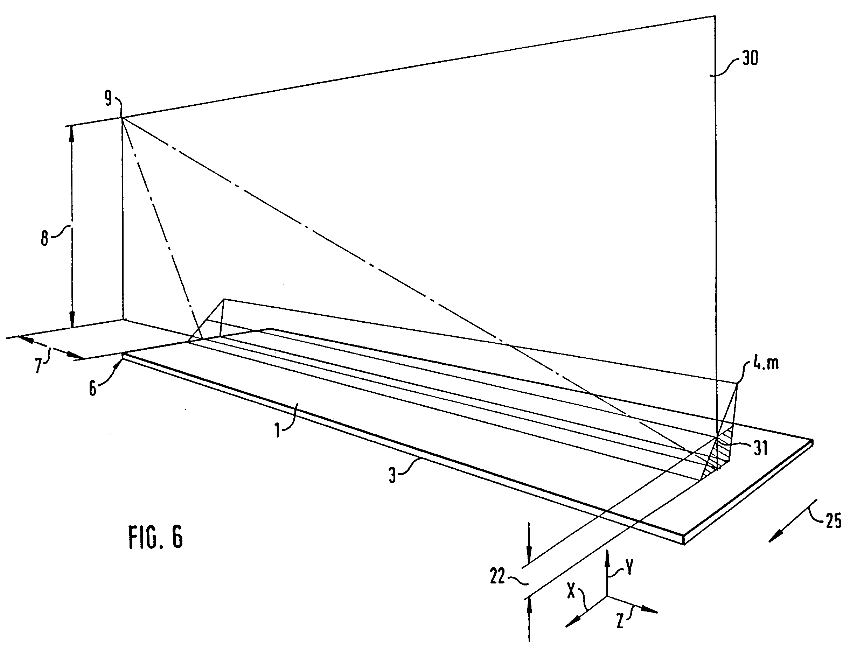

Um das Grundprinzip jetzt noch einmal eindeutiger darzustellen, wird in Figur 6 eine Darstellung der einzelnen Ebenen gegeben. Auf der Bezugsebene liegt die Brettware 1, welche in der Vorschubsrichtung 25 bewegt wird. In der Entfernung 7 und der Höhe 8 von dem Nullschnitt liegt das Objektiv 9 der CCD-Zeilenkamera 10. Diese CCD-Zeilenkamera hat eine Beobachtungsebene 30, welche insgesamt dargestellt worden ist. Diese Beobachtungsebene 30 trifft senkrecht auf die, durch die Strahlenquellen 4.m gebildeten, Lichtschnitte 5.m, welche in Richtung auf die Bezugsebene gesehen eine dreieckförmige Form aufweisen. Die Beobachtungsebene 30 trifft jetzt in etwa der Mitte dieser, von den Strahlenquellen 4.m gebildeten, Strahlenfächer auf. Der Schnittpunkt 31 bildet in Verbindung mit dem Schnittpunkt der Beobachtungsebene 30 mit der Bezugsebene 3 die maximale Höhe 22 der zu vermessenden Brettware 1.

5

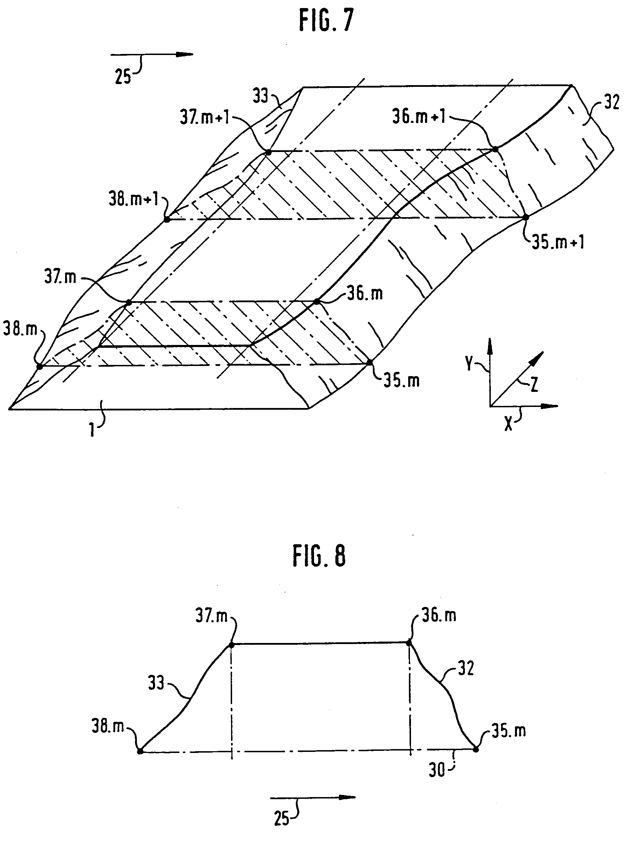

In Figur 7 wird ein mögliches Meßobjekt mit den aufgenommenen Meßpunkten gezeigt. Zur Darstellung reicht hier ein Ausschnitt der Brettware 1, welche in der Brettvorschubsrichtung 25, in die Schnittpunkte der Lichtschnitte 5.m und des Objektfeldes 23 geführt wird. Trifft die Unterkante der Waldkante 32 auf einen solchen Schnittpunkt, wird ein Meßpunkt 35.m, 35.m + 1 in einer nicht dargestellten Auswerteeinheit gespeichert. Das gleiche trifft zu, wenn die Oberkante der Waldkante 32 erreicht ist. Dann werden die Meßpunkte 36.m, 36.m + 1 gespeichert. Erreicht die Oberkante der zweiten Waldkante 33 der Brettware 1 den Schnittpunkt wird ein dritter Meßpunkt 37.m, 37.m + 1 gespeichert. Der letzte Meßpunkt 38.m, 38.m + 1 wird gespeichert, wenn die Unterkante den Schnittpunkt der Lichtstrahlen verläßt.

In Figur 8 wird der dazugehörende Schnitt einer Messung nochmals einzeln dargestellt. Von der Vorschubrichtung 25 aus gesehen, wird an der Unterkante der Waldkante 32 der erste Meßpunkt 35.m erfaßt. Der nächste zu speichernde Meßpunkt 36.m wird erfaßt, wenn die Brettwarenoberkante erreicht wird. Sobald die Oberkante der zweiten Waldkante 32 die Beobachtungsebene 30 der CCD-Zeilenkamera 10 durchläuft, wird der dritte Meßpunkt 37.m erfaßt. Letztendlich wird der vierte Meßpunkt 38.m gespeichert, wenn die Unterkante der Brettware 1 die Beobachtungsebene 30 verläßt. Erreicht wird dieses Ergebnis durch serielle Auswertung der CCD-Zeilensignale in aquidistanten Zeit- oder Wegabständen.

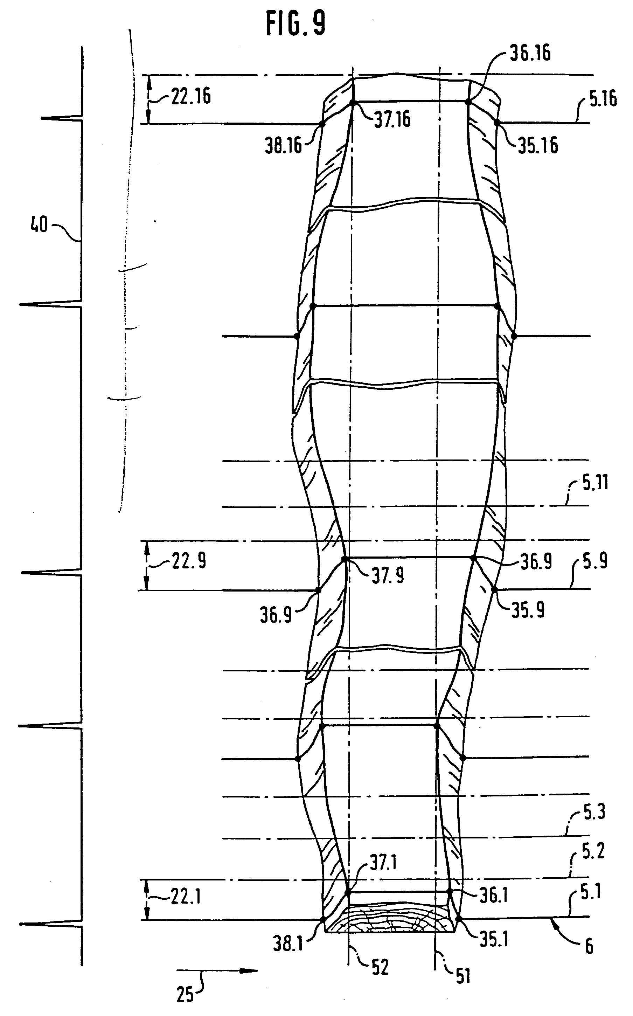

In Figur 9 wird eine Darstellung der Kurven der Pixels je Meßstelle in Verbindung mit dem CCD-Zeilensignal gezeigt. Ausgangspunkt ist wieder eine Brettware 1, welche in der Bewegungsrichtung 25 bewegt wird. Zu den einzelnen Pixelnummern 39 sind die Lichtschnitte zugeordnet.

Ausgewählte Meßkurven sind für die Lichtschnitte 5.1, 5.9 und 5.16 dargestellt. Die mögliche Meßhöhe 22.1, 22.9 bzw. 22.16 entspricht dem Abstand der Pixels. Zugeordnet sind noch die CCD-Zeilensignale 40. Werden jetzt die einzelnen Meßpunkte 36.m bzw. 37.m der Oberkanten der Seitenware betrachtet, so erkennt man, daß geradlinige Schnitte 51, 52 gezogen werden können, so daß alle Waldkantenstücke herausfallen.

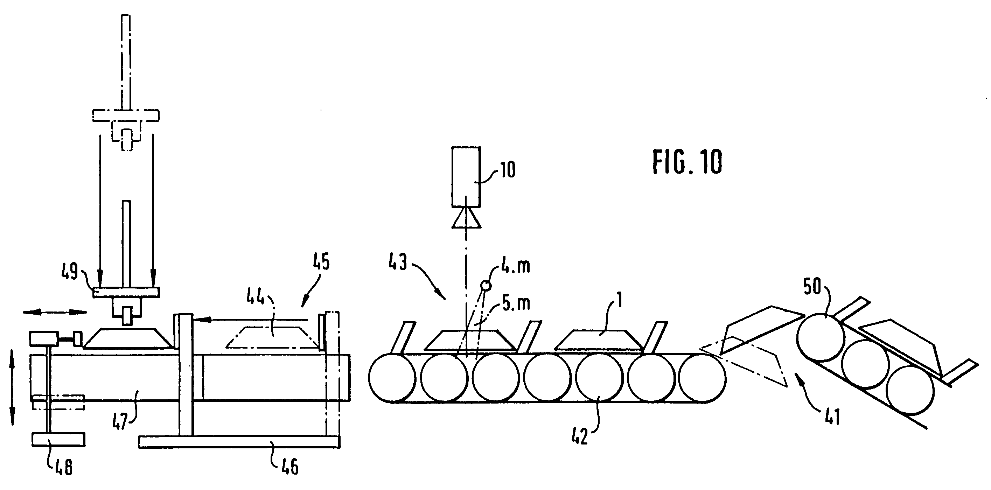

In Figur 10 wird ein möglicher Einsatz der Meßanordnung in einem Sägewerk dargestellt. Die Holzbearbeitung in einem Sägewerk beginnt mit einer Vorschnittmaschine, in der Regel ein Gatter, hinter dem eine Trennung von Haupt- und Seitenware vorgenommen wird. Nach Trennung von Haupt- und Seitenware wird die Seitenware auf entsprechende Länge geschnitten und die Schwarten aussortiert.

Aus der Seitenware müssen auf mindestens einer Schnittfläche scharfkantige Bretter geschnitten werden, d. h. die Waldkante oder ein Teil davon muß abgetrennt werden. Diese Bretter werden in einem Besäumer zugeschnitten. Der Besäumer besteht allgemein aus mehreren verstellbaren Sägen, die so positioniert werden, daß das optimale Brett bei maximaler Seitenwarenausnutzung gesägt wird. Da die Bretter beliebige Breiten annehmen können und auch beliebig gekrümmt sein können, muß jedes Brett beim Einschieben in den Besäumer ausgerichtet werden. Die Seitenware wird dabei über einen Vereinzelner 50 und einen Abfallschacht 41, der Ausschußware entfernt, auf einem Querförderer 42 transportiert. Über entsprechende Transporteinrichtungen des Querförderers 42 gelangt die Brettware 1 zu dem auf dem Querförderer 42 angeordneten Meßtisch 43. Über diesem Meßtisch 43 ist die CCD-Zeilenkamera 10 angeordnet. Ebenfalls sind die entsprechenden Strahlenquellen 4.m über diesem Tisch angeordnet. Das vermessene Brett 44 wird dann ggf. auf eine Warteposition 45 gebracht.

Mittels eines Positionierers 46 oder direkt durch den Querförderer 42 wird dann das Brett zu einem Einzugstisch 47 transportiert. An diesem Einzugstisch 47 sind Ausrichtzylinder 48 angeordnet, die das vermessene Brett entsprechend der ausgewerteten Meßpunkte ausrichten. Wenn das Brett 44 ausgerichtet ist, wird es durch Druckrollen 49 auf dem Einzugstisch 47 fixiert. Anschließend wird das Brett gesägt, indem es durch eine nicht dargestellte Anordnung von Sägen geschoben wird. Durch eine ebenfalls nichtdargestellte Auswerteeinheit wird aus den Ansteuersignalen, die sich aus der Brettbreite ergeben, die Sägeblatteinstellung berechnet.

Die Mittellinie des zu schneidenden Brettes wird dabei als Ideallinie bezeichnet und muß auf die Sägeeinstellung ausgerichtet werden.

Die Ausrichtung erfolgt auf dem Besäumer-Einzugtisch. Für diesen Zweck enthält er eine spezielle Ausrichteeinheit. Die Ausrichteeinheit, d. h. die Ausrichtzylinder 48 bestehen beispielsweise aus einem versenkbaren Anschlag, der mit definierten ausfahrbaren Kolben bestückt ist. Die Kolben sind so positioniert, daß sie auf gleicher Brettlänge liegen, wie die Meßpunkte. Je nach Länge des Brettes werden zwei Kolben so positioniert, daß das Brett beim Anlegen an diese Kolben automatisch auch ausgerichtet wird. Für die Ansteuerung der Kolben wird jeweils der Abstand äußere Waldkante-Ideallinie berechnet. Um einen hohen Durchsatz der Maschine zu gewährleisten, sind die Ausrichtekolben auf einem versenkbaren Anschlag montiert. Sobald das Brett ausgerichtet und fixiert ist, werden die Kolben versenkt und das Brett in den Besäumer eingeführt.

**Patentansprüche**

1. Meßsystem zur berührungslosen Erfassung der Kontur von Langgegenständen mit diffus reflektierender Oberfläche, welches nach dem Triangulationsprinzip unter Einsatz einer Detektorzeile (10) und Strahlenquellen arbeitet, wobei der Detektorzeile (10) eine Auswerteeinheit zur Bildanalyse und Abspeicherung der erfaßten Meßpunkte (35.m.... 38.m) nachgeordnet ist, und wobei der Lichtschnitt der ersten Strahlenquelle dabei den Bezugspunkt (6) für die Detektorzeite darstellt,
   dadurch gekennzeichnet,
   daß zur Erfassung der Meßobjektkonturen mehrere Strahlenquellen (4.m) in einem bestimmten vom Bezugspunkt (6) der Detektorzeile (10) aus größer werdenden Abstand zueinander und parallel zur Längsachse des Meßobjektes (1), aber außerhalb der Beobachtungsebene (30) der auswertenden Detektorzeile (10) liegen, wobei die Strahlen jeder Quelle aus der Sicht der Detektorzeile (10) ein Dreieck formen, und daß der Meßgegenstand (1) quer zur Beobachtungsebene geführt wird, wobei dann pro Strahlenquelle (4.m) Meßpunkte (35.m ... 38.m) der jeweiligen Kontur an dieser Stelle aufgenommen werden.

2. Meßsystem nach Anspruch 1,
   dadurch gekennzeichnet,
   daß ein Objektiv (9) für die Detektorzeile (10) in Längsrichtung zur Bezugsebene (3) gesehen, mit dem Abstand l (7) zum Nullschnitt (6) entfernt und der Höhe h (8) über dem Meßobjekt (1) angeordnet ist, wobei die erste Strahlenquelle (4.1) in etwa senkrecht über dem Nullschnitt (6) angeordnet ist und sich der Abstand $Z_m$ der Strahlenquellen (4.m) vom Bezugspunkt für den Nullschnitt (6) aus gesehen nach der Beziehung

   $$Z_m = h \cdot \tan(\alpha_m) - l$$

   berechnet, wobei der Winkel $\alpha_m$ den Winkel zwischen dem Objektstrahl für den Lichtschnitt (5.m) und der Normalen der Bezugsebene darstellt.

3. Meßsystem nach den Ansprüchen 1 bis 2,
   dadurch gekennzeichnet,
   daß bei Anordnung der Strahlenquelle senkrecht auf der Bezugsebene-Längsachse die mögliche Meßbereichshöhe $d_m$ (22) des Meßobjektes (1) nach der Beziehung

   $$d_m = \frac{\Delta Z_m}{\tan \alpha_{(m+1)}}$$

   bestimmt wird, wobei $\Delta Z_m$ den Meßstellenabstand im Längenmeßbereich der Bezugsebene (3) darstellt.

4. Meßsystem nach den Ansprüchen 1 bis 3,
   dadurch gekennzeichnet,
   daß die mögliche Neigung des Lichtschnittes (5.m) zur Meßobjekt - Flächennormalen nach der Beziehung

   $$\delta_m = \arctan \frac{\Delta Z_m (d_m - d_{max})}{d_m \cdot d_{max}}$$

   berechnet wird, wobei $d_{max}$ den Soll-Meßbereich für die Meßobjektdicke darstellt.

5. Meßsystem nach den Ansprüchen 1 bis 3,
   dadurch gekennzeichnet,

daß die Detektorzeile (10) als CCD-Zeile ausgebildet ist, die durch optische Abbildungen alle Lichtschnitte auf einmal erfaßt.

6. Meßsystem nach Anspruch 1 bis 3,
   dadurch gekennzeichnet,
   daß als Strahlenquellen (4.m) Laserdiodensysteme verwendet werden und diese sehr nahe über der Bezugsebene angeordnet sind.

**Claims**

1. Measuring system for registering without contact the outline of long objects with diffusely reflecting surface, which works according to the triangulation principle using a detector line (10) and sources of radiation, an evaluating unit being assigned to the detector line (10) for image analysis and storage of the registered measuring points (35.m ... 38.m) and the light intersection of the first source of radiation then representing the reference point (6) for the detector line, characterized in that, for registering the outlines of the object to be measured, several sources of radiation (4.m) lie at specific intervals from the reference point (6) of the detector line (10) - the interval between them increasing - and parallel to the longitudinal axis of the object to be measured (1), but outside the observation plane (30) of the evaluating detector line (10), the rays of each source from the point of view of the detector line (10) forming a triangle, and in that the object to be measured (1) is directed at right angles to the observation plane, whereby then per source of radiation (4.m) measuring points (35.m ... 38.m) of the actual outline at this point are established.

2. Measuring system according to Claim 1, characterized in that an objective (9) for the detector line (10), seen in longitudinal direction of the reference plane (3), being the distance l (7) away from the zero intersection and having the height h (8), is arranged over the object to be measured (1), the first source of radiation (4.1) being located roughly vertically above the zero intersection (6) and the distance $Z_m$ of the sources of radiation (4.m), seen from the reference point for the zero intersection (6), being calculated according to the following relation

$$Z_m = h \cdot \tan(\alpha_m) - l$$

the angle $\alpha_m$ representing the angle between the object ray for the light intersection (5.m) and the normals of the reference plane.

3. Measuring system according to Claims 1 to 2, characterized in that with arrangement of the source of radiation vertically on the reference plane's longitudinal axis the possible measuring range height $d_m$ (22) of the object to be measured (1) is determined according to the relation

$$d_m = \frac{\varDelta z_m}{\tan \alpha_{(m+1)}}$$

$\Delta Z_m$ representing the measuring point distance in the linear measuring range of the reference plane (3).

4. Measuring system according to Claims 1 to 3, characterized in that the possible inclination of the light intersection (5.m) in relation to the surface normals of the object to be measured is calculated according to the relation

8

$$\measuredangle\, z_m = arc\ tan\ \frac{\measuredangle\, Z_m\ (d_m - d_{max})}{d_m \cdot d_{max}}$$

$d_{max}$ representing the nominal measuring range for the thickness of the object to be measured.

5. Measuring system according to Claims 1 to 3,
characterized in that
the detector line (10) is formed as CCD line, which by means of optical images registers all light intersections at once.

6. Measuring system according to Claims 1 to 3,
characterized in that
as sources of radiation (4.m) laser diode systems are used and these are located very close above the reference plane.

## Revendications

1. Système de mesure pour appréhender sans contact le contour d'objets allongés ayant une surface donnant une réflexion diffuse, le système travaillant selon le principe par triangulation avec mise en oeuvre d'une ligne de détecteurs (10) et de sources, de rayonnement, une unité d'exploitation destinée à une analyse d'image et a un stockage mémoire des points de mesure (35 m... 38 m) appréhendés étant disposée en aval de la ligne de détecteurs (10), et le plan de coupe de la lumière de la première source de rayonnement constituant alors le point de référence (6) pour la ligne de détecteurs, caractérisé en ce que, pour appréhender les profils de l objet à mesurer, plusieurs sources de rayonnement (4.m) sont placeés selon un espacement déterminé, devenant plus grand sur le trajet partant du point de référence (6) de la ligne de détecteurs (10), sur une ligne parallèle à l'axe longitudinal de l'objet à mesurer (1), mais en dehors du plan d'observation (30) de la ligne de détecteurs (10) servant à l'évaluation, les rayons de chaque source formant un triangle lorsqu'il sont observés sur la ligne de détecteurs, et en ce que l'objet à mesurer (1) est guidé transversalement par rapport au plan d'observation, des points de mesure (35.m... 38.m) du contour spécifique étant enregistrés en cet endroit pour chaque source de rayonnement (4.m).

2. Système de mesure selon la revendication 1, caractérisé en ce qu'un objectif (9) destiné à la ligne de détecteurs (10) est disposé, lorsqu'on observe dans la direction longitudinale par rapport au plan de référence (3), à une distance $l$ (7) d'éloignement par rapport à la coupe zéro (6) et de hauteur h (8) au dessus de l'objet à mesurer (1), la première source de rayonnement (4.1) étant disposée à peu près à la verticale au dessus de la coupe de zéro (6) et la distance $Z_m$ entre les sources de rayonnement (4.m) et le point de référence de la coupe zéro (6) étant calculée d'après la relation

$Z_m = h \cdot tang\ (_m) - 1$

l'angle $\alpha_m$ constituant l'angle entre le rayon d'objet du plan de coupe lumineux (5.m) et la normale par rapport au plan de référence.

3. Système de mesure selon la revendication 1 à 2, caractérisé en ce qu'en cas d'agencement de la source de rayonnement à la verticale sur l'axe longitudinal du plan de référence, la hauteur $d_m$ (22) possible de la plage de mesure de l'objet mesuré (1) est déterminée d'après la relation

$$d_m = \frac{\Delta Z_m}{tang\ \alpha_{(m + 1)}}$$

EP 0 508 339 B1

dans laquelle $\Delta Z_m$ constitue l'espacement entre points de mesure dans la plage de mesure de longueur du plan de référence (3).

4. Système de mesure selon la revendication 1 à 3, caractérisé en ce que l'inclinaison possible du plan de coupe de lumière (5.m) par rapport à la normale à la surface de l'objet à mesurer est calculé d'après la relation

$$\delta_m = arc\ tan\ \frac{\Delta Z_m\ (d_m - d_{max})}{d_m\ .\ d_{max}}$$

$d_{max}$ constituant la plage de mesure de consigne de l'épaisseur de l'objet à mesurer.

5. Système de mesure selon les revendications 1 à 3, caractérisé en ce que la ligne de détecteurs (10) est réalisée sous forme de ligne de capteurs CCD, appréhendant d'un tout la totalité des plans de coupe lumineux, par représentation optique.

6. Système de mesure selon les revendications 1 à 3, caractérisé en ce que l'on utilise comme source de rayonnement (4.m) des systèmes diode-laser et on les dispose à proximité immédiate au-dessus du plan de référence.

10

FIG. 1

FIG. 2

FIG. 3

FIG. 4

FIG. 5

FIG. 6

EP 0 508 339 B1

## FIG. 7

## FIG. 8

# FIG.9

FIG. 10

EP 0 508 339 B1